(19) Europäisches Patentamt

European Patent Office

Office européen des brevets

(11) **EP 1 013 077 B1**

(12) **EUROPEAN PATENT SPECIFICATION**

(45) Date of publication and mention
of the grant of the patent:
**05.02.2003 Bulletin 2003/06**

(21) Application number: **98942295.1**

(22) Date of filing: **28.08.1998**

(51) Int Cl.$^7$: **H04N 3/233**, H04N 9/28

(86) International application number:
**PCT/US98/17920**

(87) International publication number:
**WO 99/011054 (04.03.1999 Gazette 1999/09)**

(54) **DIGITAL RASTER CORRECTION**

DIGITALE RASTERKORREKTUR

CORRECTION NUMERIQUE DE TRAMES

(84) Designated Contracting States:
**DE FR GB**

(30) Priority: **29.08.1997 US 57250 P**

(43) Date of publication of application:
**28.06.2000 Bulletin 2000/26**

(73) Proprietor: **Thomson Licensing S.A.**
**92648 Boulogne Cedex (FR)**

(72) Inventors:
• **GEORGE, John, Barrett**
  **Carmel, IN 46033 (US)**
• **GLAD, Frank, Albert**
  **El Paso, TX 79912 (US)**

(74) Representative: **Rossmanith, Manfred, Dr.**
**Deutsche Thomson-Brandt GmbH**
**European Patent Operations**
**Karl-Wiechert-Allee 74**
**30625 Hannover (DE)**

(56) References cited:
**EP-A- 0 665 695**          **US-A- 5 345 280**

• **MAKOTO SHIOMI ET AL: "A FULLY DIGITAL**
**CONVERGENCE SYSTEM FOR PROJECTION**
**TV" IEEE TRANSACTIONS ON CONSUMER**
**ELECTRONICS, vol. 36, no. 3, 1 August 1990,**
**pages 445-452, XP000162874**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This disclosure relates to the field of deflection correction waveform generation and in particular to the digital generation of geometric and convergence correction signal waveforms.

BACKGROUND OF THE INVENTION

Digital convergence in a projection television receiver can be achieved using a two dimensional matrix of adjustable factors applicable to points distributed at regular intervals across the visible screen area. The degree of deflection correction may be finely adjusted at each of these points independently.

In the horizontal direction the deflection correction is determined by a numeric digital factor applicable at the matrix points, which is converted to an analog signal for driving a convergence correction coil. At intermediate points between the points on the matrix, the correction factor is determined by averaging with an analog filter. In the vertical direction it is necessary to calculate the values for the intervening scan lines between the lines corresponding to the points on the correction matrix. In a lower cost display system, correction for the lines between the points that are numerically defined are determined by taking a difference between the correction values for the nearest adjustment point above and below the point in question, dividing by the number of lines in between the adjustment points, and weighting the correction value for the particular line being determined by linear interpolation. Thus the waveform that is generated follows a straight line between the two numeric points. To facilitate interlace scanning an offset value may be added to the correction data for alternate fields.

Digital correction may affect picture geometry in addition to converging corresponding points on the three color rasters. Green is typically chosen to be centered on the projection system optical axis. In this position, the image on the face of the green tube suffers least geometric distortion. Red and blue displays are positioned on the axis vertically but typically are located off the optical axis horizontally. As a result, the red and blue rasters are additionally distorted and require keystone shaping to compensate for this off axis projection location. Because the optical distortion is minimum for the green image, it is chosen as the geometric reference. The green raster is sized and shaped by correction waveforms to minimize geometric distortion. The red and blue rasters are then matched to align precisely with the green image.

The uncorrected green raster suffers a large vertical pincushion distortion which is corrected by a correction waveform. For optimum geometry, the correction waveform along each column has a distinct S-shape having sinusoidal and parabolic components, and for the off axis red and blue images an additional linear component is required.

The correction waveform may, for example, be adjustable along a matrix of factors defining 13 rows and 16 columns. For each point in the matrix, numerical factors define the associated displacement of the red, green and blue rasters to be effected at that point for achieving accurate picture geometry and alignment of the red and blue rasters. Since the number of correction points or nodes for each column is relatively small, for example twelve points spaced vertically in the visible area of the screen, the linearly interpolated S-shaped correction waveform may have abrupt changes in slope as it crosses each node. These slope changes at each adjustment line cause blocks of raster scan lines to appear with a brightness difference due to non-uniform spacing of the horizontal lines in adjacent areas where convergence is adjusted according to different matrix factors. If a video signal having a constant level or a "flat" field is displayed, the raster will exhibit a series of distinct horizontal bands or lines of differing brightness resulting from correction waveform discontinuities.

SUMMARY OF THE INVENTION:

In an inventive arrangement a circuit generates a correction signal to correct image distortion on a display screen. A memory stores displacement values corresponding to spaced points on the screen in a grid of rows and columns. The displacement values of the grid generally defining correction curves for correcting the image distortion without introducing significant banded regions on the the apparatus and method according to the present invention are defined in claims 1 and 6 respectively, display screen. An interpolator is coupled to the memory for linearly interpolating intermediate values between adjacent ones of the stored displacement values. A digital to analog converter is coupled to the interpolator for providing the correction signal.

In an inventive arrangement a video apparatus has a cathode ray tube displays an image subject to image distortion. A deflection coil is located on the cathode ray tube and is driven by a drive amplifier. A digital to analog converter generates an output signal, which is coupled to the drive amplifier. A memory has stored linearly interpolated displacement values corresponding to spaced points on the in a grid of rows and columns. An interpolator is coupled to the memory and responsive to the stored interpolated displacement values the interpolator linearly interpolates values adjacent to ones of the stored interpolated displacement values. The digital to analog converter is coupled to the interpolator and generates a correction signal to drive the deflection coil to correct the image distortion.

## IN THE DRAWINGS:

FIGURE 1 is a block diagram showing the elements of a digital correction circuit.

FIGURE 2 is a block diagram illustrating a projection display having digital raster correction means.

FIGURE 3 illustrates a nominal raster pattern with ideal geometry, the visible portion being cross hatched and a matrix of adjustment points being shown as circles or dots.

FIGURE 4 shows a portion of the pattern of FIGURE 3 with interpolated points between the adjustment points shown as crosses or X's.

FIGURE 5 is a plot of ideal geometry convergence correction waveforms for the columns of a center axis raster (e.g., the green raster of a projection television), except having straight lines connecting the adjustment points as characteristic of linear interpolation.

FIGURE 6 depicts a flat field video raster with brightness banding resulting from abrupt slope changes in a column correction waveform due to linear interpolation between discrete matrix adjustment points depicted in FIGURE 5.

FIGURE 7 is a plot of linear rather than S-shaped correction waveforms for eliminating banding as in FIGURE 6.

FIGURE 8 shows inner pincushion distortion produced by linear column correction as depicted in FIGURE 7.

FIGURE 9 is a plot of column corrections according to a n inventive aspect.

FIGURE 10 is a chart of equations for determining column values according to an inventive aspect and as shown in FIGURE 9.

FIGURES 11A and 11B are five by five adjustment matrices illustrating simplified linearizing value interpolation and of S-correction of selected linearized matrix column values.

FIGURE 12 is a simplified flow chart illustrating an advantageous addition of S-curvature to a linearized 13 by 16 correction matrix.

## DETAILED DESCRIPTION:

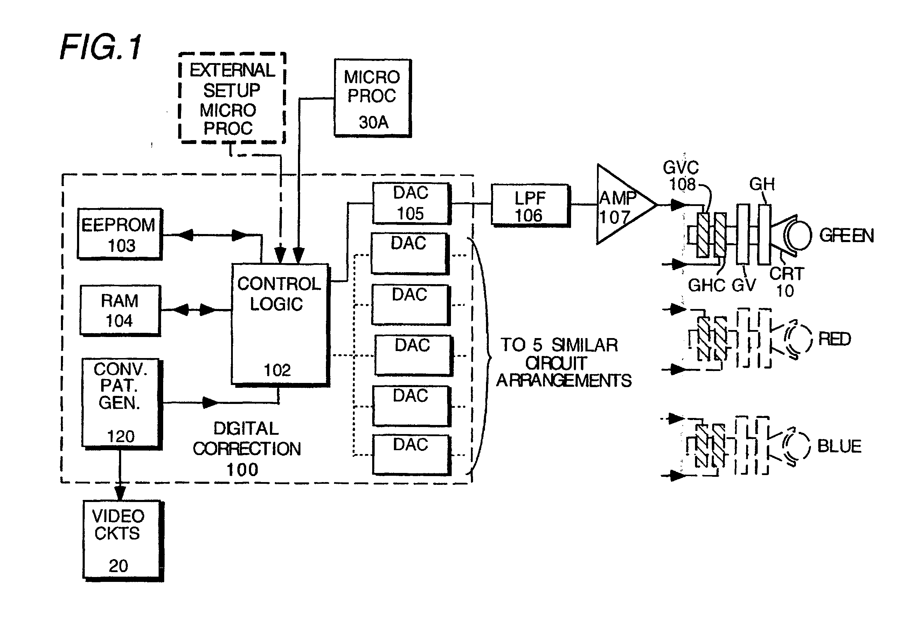

A digital raster correction system generally consists of a pattern generator, an amplifier for driving the convergence yokes, a memory for storing correction constants, and an interface to a controller or microprocessor. Such a system is shown with a single cathode ray tube and deflection arrangement in FIGURE 1.

The digital raster correction system includes an internal controller 102. A microprocessor 30A may be employed together with an external video circuit 20 coupled to a convergence pattern generator 120 for independent adjustments and viewing of geometric or convergence correction. An external setup microprocessor, shown with a dotted outline, is used to process initial adjustment values which are written to EEPROM 103. Such an external microprocessor driven adjustment may be accomplished using automatic means to record and analyze convergence test pattern displays, and for generating initial or updated correction factors. Adjustments to geometric or convergence correction may be required, for example, to correct for mis-convergence resulting from changes in display orientation relative to the Earth's magnetic field or as a result of component failure, and these changes to the correction values stored EEPROM 103 may be accomplished by microprocessor 30A.

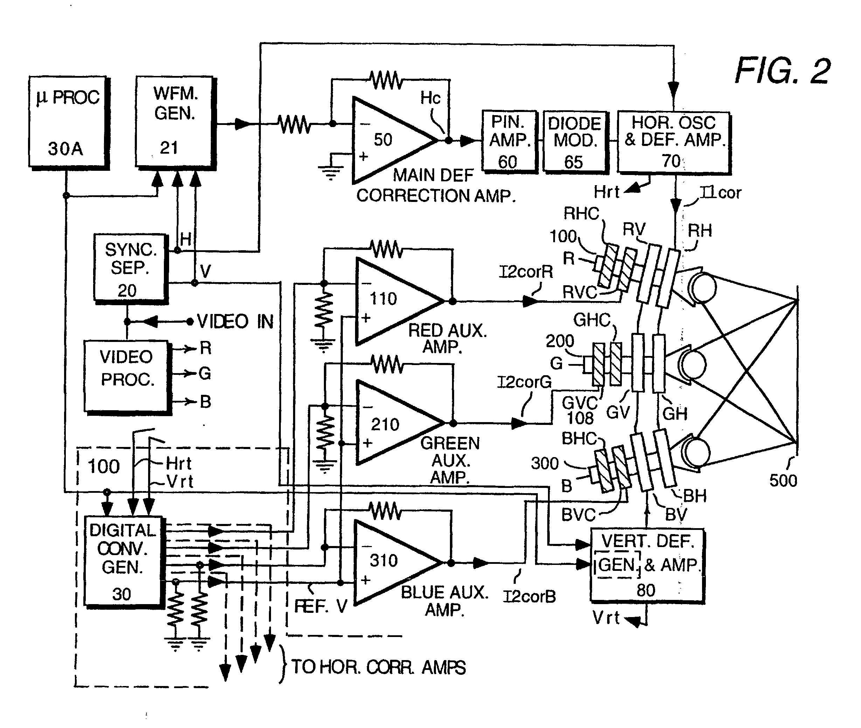

FIGURE 1 illustrates some digital portions and FIGURE 2 illustrates the drive circuits and CRTs of an exemplary projection display system with which the digital raster correction method and apparatus of the invention may be advantageously employed. Digital correction circuit 100 in FIGURE 1 includes EEPROM 103, which provides nonvolatile storage of correction or adjustment factors, internal RAM 104 for volatile storage, and a digital to analog converter DAC 105, each coupled to controller 102.

Geometric or convergence adjustments are made b y defining a matrix of adjustment points for each of the three colors. The on-screen video pattern generator 120 can provide location references for adjustments at particular locations on the display corresponding to the matrix of data points stored in EEPROM 103. Adjustment or correction data from EEPROM 103 can be read into internal RAM 104 at power-up, and then used to generate further factors such as interpolated factors for use between adjacent reference locations. Internal RAM 104 stores 1248 data words which represent a matrix of 13 by 16 points, with X alignment points horizontally by Y alignment points vertically, by 2 representing horizontal and vertical corrections, by 3 representing the three display devices forming R, G and B images.

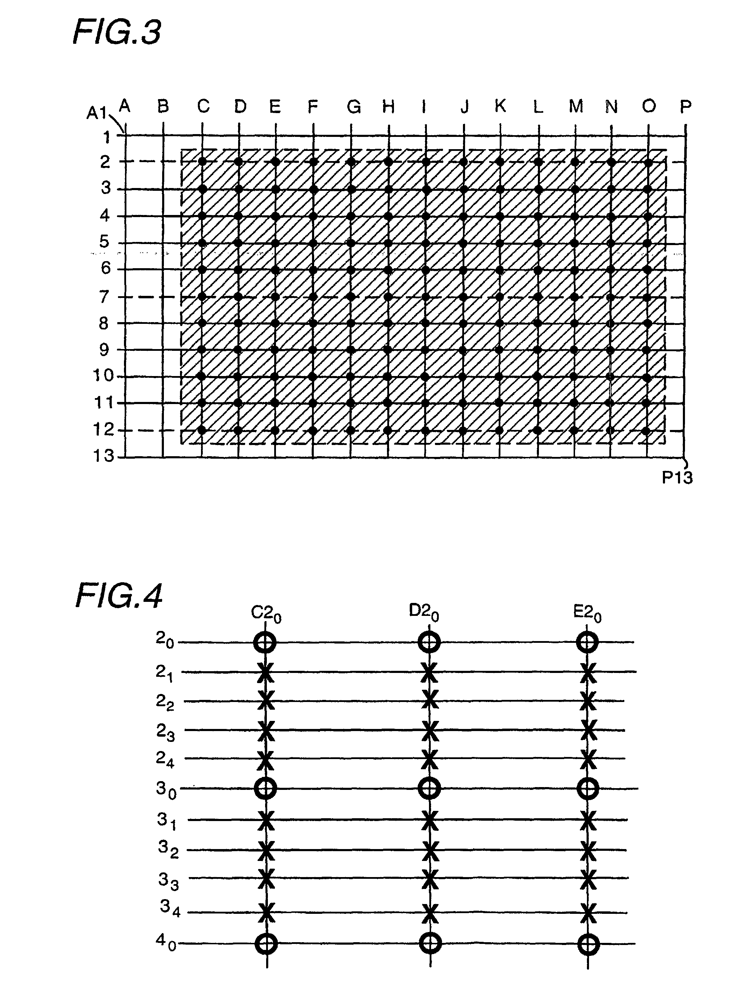

The active scan area of a display means, for example, is divided into a matrix of rows and columns, for the purposes of corrective control. The boundary lines of the rows and columns can be considered to define a cross hatch grid. FIGURE 3 shows an exemplary display screen illustrating such a cross hatch grid in which the active or visible area is defined by a shaded rectangle. For purposes of illustration, the number of vertical grid points or samples is 13, and the number of horizontal samples is 16. These numbers are chosen merely for example. The number of rows and columns, and the resulting sections, are selected depending on the desired extent of correction in the resulting raster.

Positive or negative horizontal and vertical corrections may be employed for each of the three colors at each measurement point, as well as on the intervening horizontal scan lines between the measurement points. Referring to FIGURE 1, the signals are read out by controller 102 and coupled to digital to analog converter 105, the output of which is smoothed by low pass filter 106 and amplified by drive amplifier 107. The filter output is a current signal representing the current necessary in correction coil 108 to correctly converge, or minimize geometric distortion of the raster generated on CRT 10. Amplifier 107 may be a feedback amplifier that measures instantaneous coil current and matches the current in correction coil 108 as a function of the output of digital to analog converter (DAC) 105 as the adjustment factors are read out during raster scanning. The correction current flow through coil 108 results in the raster scanned image formed by on CRT 10 appearing with convergence correction or minimized geometric distortion.

In FIGURE 4, the six circled points $C2_0$ through $E4_0$ represent a subset of point locations for which correction data is defined. The correction values at grid points marked X, $C2_1$ through $C2_4$, for example, namely the values used between $C2_0$ and $C3_0$, are calculated by interpolation between the values of $C2_0$ and $C3_0$. As a result, if the correction values are plotted for the columns, they are categorized by linear straight lines between the circles, with discontinuities, or abrupt changes of slope, occurring at the circled points.

In FIGURE 2, separate red, green and blue amplifiers 110, 210, 310 correspond to amplifier 107 in the more general diagram of FIGURE 1. Amplifiers 110, 210, 310 drive correction coils RVC, GVC, BVC with signals provided by digital convergence generator 30, shown generally in FIGURE 2. Corresponding amplifiers (not shown) are provided for horizontal correction coils RHC, GHC, BHC. The signals driving correction amplifiers 110, 210, 310 and their respective coils are read out synchronously with the horizontal and vertical rates a s provided by a sync separator 20. The horizontal and vertical rates are also coupled to a bus controlled waveform generator 21 which generates horizontal and vertical waveforms. The vertical sawtooth signal is adjusted within generator 21 to provide pincushion, trapezoidal and S correction and this shaped, or pre-distorted waveform is coupled to a vertical deflection amplifier 80 and deflection yokes GV, RV, BV of three CRTs. In FIGURE 2. the vertical deflection generator and amplifier 80 is depicted with a dotted box to indicate that vertical waveform generation and shaping occurs within waveform generator 21.

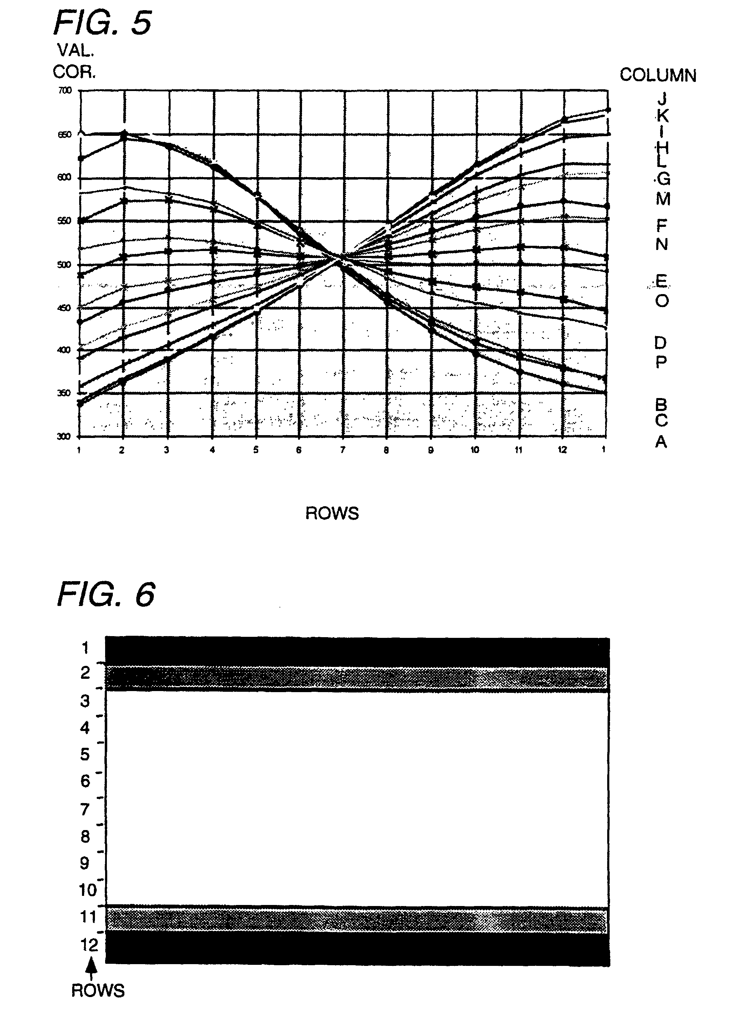

FIGURE 3 may be considered to represent a green reference crosshatch pattern with perfect geometry, as might be achieved by the correction curves shown in FIGURE 5. The Y axis of FIGURE 5 shows the numeric correction values that drive the vertical green digital-to-analog converter and represent correction current amplitude in correction coil GVC. Each of the sixteen curves is a line plot wherein the discrete values at spaced adjacent points along each of the 16 vertical columns of the cross hatch are connected by lines. Series $C_0$-$O_0$ are the columns that are visible on the screen. Series A, B and P occur during horizontal retrace and may be used for fine adjustment of the vertical position of the ends of the cross hatch horizontal lines.

Whereas there are more horizontal lines in the display than vertical points in a matrix of the convergence correction factors as suggested by FIGURE 4. In order to proceed smoothly from one matrix value to the next, controller 102 linearly interpolates the value for each successive vertically spaced horizontal scan line. Referring to FIGURE 4, the correction at the intermediate "X" lines between matrix points $C2_0$ and $C3_0$ progresses linearly in equal increments. Subpoint $C2_1$ = $C2_0$ + $(C3_0 - C2_0)/5$, and subpoint $C2_2$ = $C2_0$ + $2*(C3_0 -C2_0)/5$, etc. The correction values for the circled matrix points are stored in EEPROM 103 and read out at startup of the display. The values for the intermediate or "X" points may be calculated upon startup and stored in RAM 104, or calculated "on the fly" during each display period from the stored circled matrix point values using an interpolation integrated circuit such as the SGS Thomson STV4020 Digital Convergence IC. Alternatively, the incremental difference (e.g., (C3-C2)/5) may be calculated at startup and stored, and added incrementally to $C2_0$ or the preceding convergence correction factor used.

Linear interpolation is relatively simple but produces sharp inflection points where the slope of the nominally S-shaped correction waveform changes. If the values shown in FIGURE 5 are used, the top and bottom of an unmodulated or "flat field" raster will display banded regions of differing intensity, actually row to row differences in vertical placement of horizontal scan lines. The result of such correction waveform discontinuities is shown in FIGURE 6, which for illustrative purposes is exaggerated and ignores optical projection brightness effects. The banded regions, depicted in FIGURE 6, result from abrupt changes in slope near the ends of some of the plots. Since the green CRT (image) contributes about 60% of the luminance of a white field, such brightness banding is most noticeable and unacceptable.

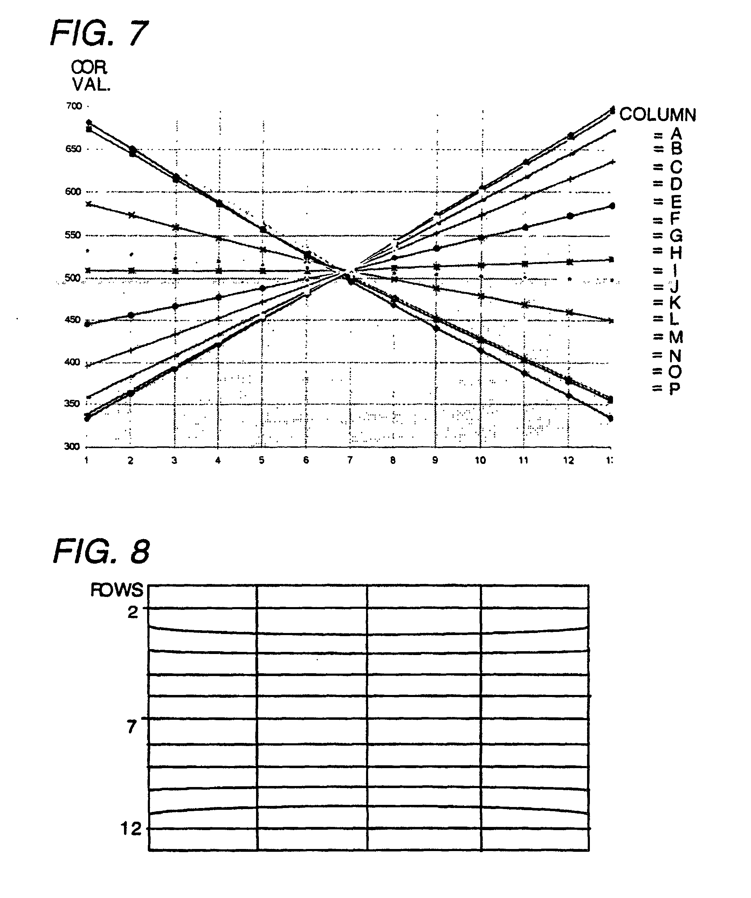

If the correction values along each column had no changes of slope, as shown in FIGURE 7, banding is eliminated. Banding can be minimized or eliminated by altering the correction factors used, to smooth the changes in slope. For example, the data can be adjusted such that the second derivative of the correction waveform along each column is, continuous, or nearly continuous. Banding could be wholly eliminated by making the correction waveforms along each column linear, for example, making the second derivative zero.

Banding may be eliminated by taking measured correction values for horizontal matrix or adjustment lines 2 and 12 of each column, and calculating a straight line between these values, that is, linearly interpolating the entire waveform for each column. However, such a linear column correction results in imperfect correction of vertical pincushion distortion because the required geometrically-dictated correction waveform is S-shaped, rather than a linear function, and has an amplitude that varies with the position of the column relative to the center vertical axis of the screen. This linearized, rather than S-shaped correction waveform produces a crosshatch display with straight top and bottom horizontal lines (2 & 12) and pincushion curvature inward from the top and bottom reducing to zero distortion at centerline (7) on all the inside horizontal lines. The resultant geometric distortion is depicted in FIGURE 8. Horizontal matrix lines 1 and 13 are not visible because they are occur beyond the displayed area but if they were visible, they would slightly barrel outward. Pincushion curvature of this type is unacceptable because it geometrically distorts the image as a function of position on the screen. For example, the distortion causes curved edges of on-screen picture elements that a viewer knows to be straight. Blocks and lines such as the edges of menus and stock market strips, for example, are expected and required to appear straight.

A vertical rate analog convergence signal with an S-shape may be employed to correct the inner pincushion distortion described above, and to make fine adjustments to address the remaining distortion with signals derived from digital correction factors. Since the analog correction is continuous and a digital part of the correction may be relatively small, problems with banding and pincushion distortion are reduced. However, consistency of such analog correction signal is difficult to maintain due to component tolerance and temperature variations. Thus resulting compensation for such analog signal instability may result in undesirable added circuit complexity, cost and power dissipation.

It is possible to calculate and store correction values of each raster line. This calculation can include forcing a continuous or zero second derivative along each correction column. However, this method is relatively costly and complex, and may suffer from the tradeoff between banding minimization and pincushion distortion, as discussed above.

In a display, banding may be minimized to be substantially unnoticeable in the interest of accurate displayed image geometry. It was found experimentally in equipment according to this example, that banding in a flat field video image was substantially undetectable if the slope changes in the linearly interpolated data were permitted but held to be within a minimized range. For example, the curve for a vertical column may be adjusted to bend no more than plus or minus five steps of a Digital to Analog Converter (DAC) per crosshatch adjustment segment. A maximum curvature of three steps per adjustment segment was selected to facilitate S correction while maintaining banding at a substantially undetectable level.

According to an inventive aspect, a modified linearization technique is used to concurrently render banding substantially undetectable and significantly reduce distortion resulting from correction value linearization. Referring to the matrix of FIGURE 3, for example, a vertical sawtooth waveform is generated by bus controlled waveform generator 21 and coupled to drive the three vertical deflection yokes GV, RV, BV. The vertical saw is adjusted within generator 21 to provide S-correction to minimize the geometric distortion of the crosshatch along columns F and N. These columns then have linear convergence correction in the vertical direction. Thus S-correction in the vertical deflection coil minimizes the magnitude of S-curvature correction signal applied to the convergence coil, which changes polarity on opposite sides of the axial center. The other columns are given correction coil S correction which is limited to 3 LSB steps divergence from the linear value. Columns A-D, H-L and P have 3 step curvature and columns E, G, M and O have 2 step curvature. The result is a simultaneous minimization of banding and pincushion distortion, such that a significantly improved picture can be consistently achieved with digital convergence correction using linear interpolation between successive correction matrix points.

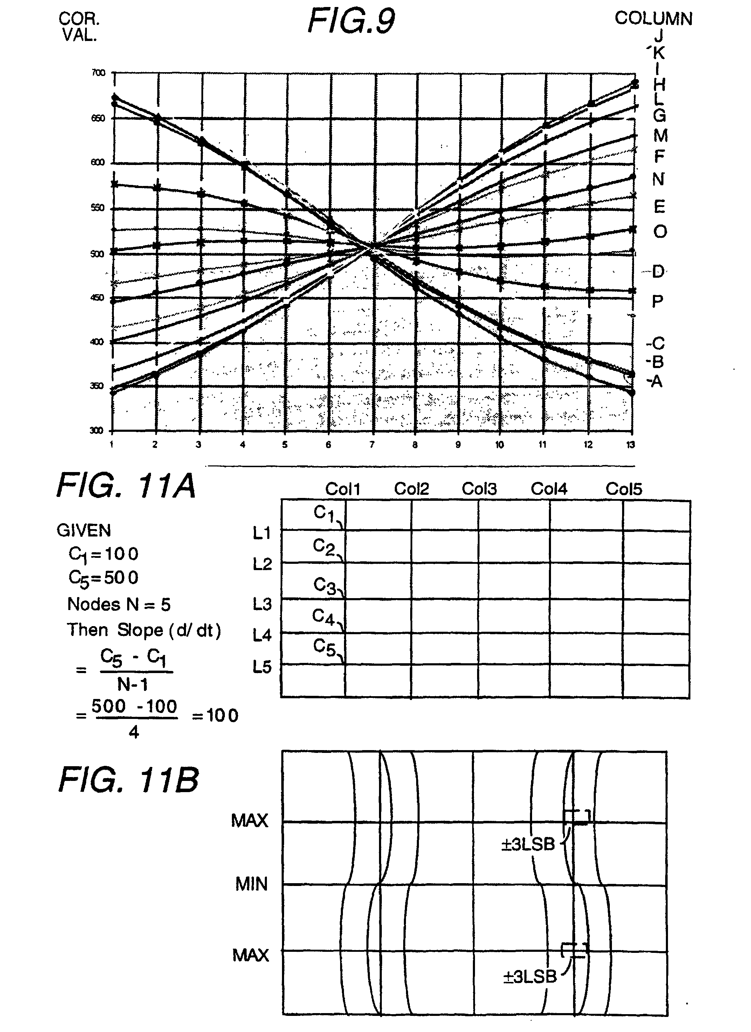

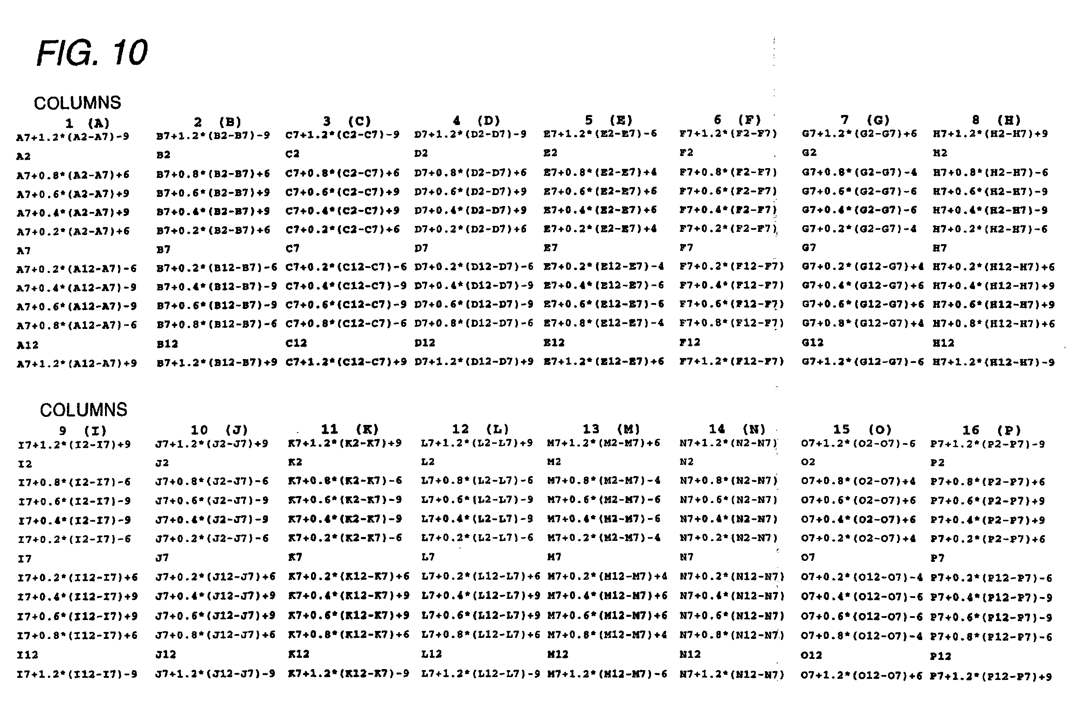

Column curves obtained from the equations are shown in FIGURE 9 and the equations are set forth in FIGURE 10. The resulting crosshatch display produced with these equations is substantially as the ideal cross hatch shown in FIGURE 3.

Devices that provide digital convergence correction with linear interpolation can be corrected for banding by forcing the second derivative of the correction waveform to be continuous at the endpoints of adjacent interpolation intervals. The invention described herein maintains the second derivative at substantially zero b y linearization in the necessary areas, thereby removing banding. This is performed using linear interpolation with adjustments according to the equations shown.

According to an inventive aspect, specific horizontal lines located along the correction node points of a generated video crosshatch pattern are measured and corrected. According to a further aspect, only the green vertical corrections preferably are subject to banding linearization algorithm to render banding in the green display image imperceptible. The green vertical raster component is corrected because the green image contributes about 60% of the perceived display brightness and thus visible image degradation results if banding is present. Since the red and blue images contribute smaller amounts to the overall brightness, about 30% and 10 % respectively, their contributions to the visibility of banding may be ignored. Red and blue raster corrections may be calculated to place them exactly on top of the green image without the requirement for linearization to suppress banding. However, use of the banding linearization algorithm is not excluded from use for red and blue raster corrections.

Since the vertical corrections are somewhat interactive, the entire alignment process is iterative with measurements of line location being made and corrections calculated and applied until lines 2, 7 and 12 (of FIGURE 3) are in the geometrically correct, absolute locations. Inasmuch as the slope or first derivative of the correction waveform down a column is constant where linearized, the second derivative is zero. The mathematical requirements are satisfied, and banding is eliminated.

In a simplified example matrix shown in FIGURE 11A, measurements are made to determine the exact location for only lines 1 and 5. The locations of the intervening lines 2 - 4 are determined by calculating the difference between the values of correction 1 and correction 5 and dividing by the number of intervening nodes minus 1. This correction differential is added to the preceding value to establish the correction value at node N-1, and represents the correction increment down each column between lines L1 and L5.

One artifact of this approach is that the intervening node points may not be at desired locations. In fact, the locations of these lines tend to result in inner pincushion distortion. In FIGURE 11A lines 2 and 4 would exhibit some degree of curvature, which might be objectionable. The amount of distortion is dependent on optics and projected image magnification. Although banding may be eliminated by reducing the second derivative to zero by linearization, it was recognized that banding may be rendered substantially undetectable even if the second derivative is not zero but allowed to have a small, limited variation. In an inventive arrangement geometric distortion, for example inner pincushion, may be corrected by the addition of an S-component to specific columns of corrections. The small variation or difference between correction values which provides S-correction depends on various system considerations, for example, the number of vertical measurement nodes, the number of D/A steps utilized, the deflection sensitivity and the like. In this exemplary system the variation corresponds to about two to three least significant bits (LSB's) in the corrections written to the nodes. This allowable variation permits a small degree of S-correction to be added certain columns of correction values. Due to symmetry about the center, the magnitude of the required S-correction increases as the area of interest moves away from center and then decreases approaching the edge.

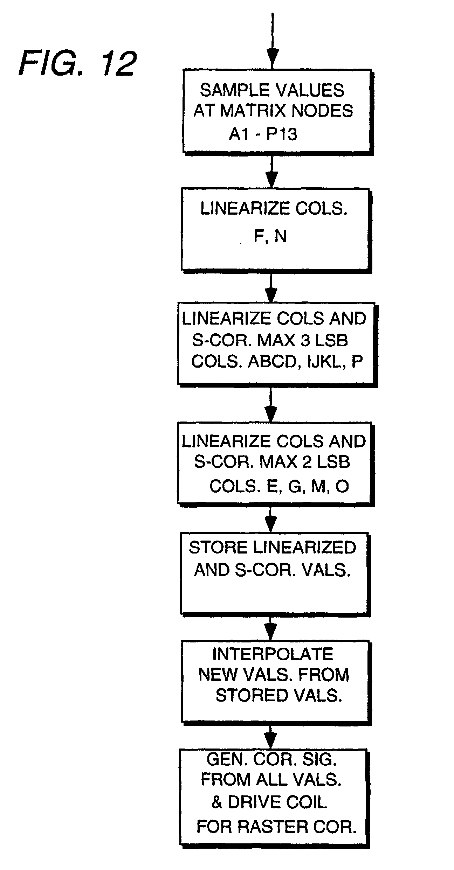

FIGURE 12 is a simplified flow chart depicting a method for the derivation and application of the corrective values of FIGURE 10, which render banding undetectable and provide S-correction to a vertical raster component. FIGURE 11B illustrates inner pincushion distortion. FIGURE 11A simplified matrix which demonstrates the effect of adding S-correction, in an example that assumes that the columns have only five matrix points representing the top, bottom, midpoint and two quarter points. In this example, if the correction range is 0 to 1023, which allows correction variation on the order of 6 to 12 correction steps. Assuming for the five vertical matrix points of column 1 that nodes $C_1$ and $C_5$ have measured correction values of 100 and 500 respectively, absolute banding removal by linearization would provide values of:

$$C_1 = 100$$

$$C_2 = 200$$

$$C_3 = 300$$

$$C_4 = 400$$

$$C_5 = 500$$

If maximum S-correction is 12 correction steps, the result is:

$$C_1 = 100$$

$$C_2 = 212$$

$$C_3 = 300$$

$$C_4 = 388$$

$$C_5 = 500$$

The added S-correction has the effect of moving location $C_2$ downward while moving location $C_4$ upward. In this simplified model, the second column Col2, uses half of the correction of column Col1 with the center column, Col3, requiring no S-correction.

A further refinement is useful in production situations where the variability of optics and electronics assemblies requires additional adjustment. As applied to the above example, this refinement consists of optimization of the magnitude of S correction, within the 2-3 LSB limitations, to achieve the best positioning (pincushion minimization) of lines 2 and 4 down each of the columns. This approach, although empirical and iterative in nature, becomes much more effective as the number of nodes down a column increases.

Application of the methods disclosed above renders banding artifacts, common to digital convergence correction devices, substantially undetectable while minimizing geometric image distortion.

## Claims

1. A video display apparatus, comprising:

    a cathode ray tube (10) for displaying an image, having a deflection correction coil (GVC) mounted thereon and coupled to drive amplifier (107);
    a digital to analog converter (105) with an output coupled to said drive amplifier (107);
    a memory (104) containing displacement values applicable to spaced points in a grid of rows (1-13) and columns (A-P), said displacement values for said columns (A-P) generally defining S-shaped correction curves having a maximum value at two areas of a display screen located substantially between a center axis (7) and ones of top and bottom edges (2,13) of the display, said S-shaped correction curves having substantially zero value at areas adjacent to said center axis (7) and said edges (2,13); and,
    interpolating means (102) for linearly interpolating intervening values adjacent ones of said displacement values and having an output coupled to said digital to analog converter (105) for generating a corrective signal (I2corG) to drive said deflection correction coil (GVC) for locally adjusting a position of said image such that banding and pincushion distortion are controlled.

2. The video display of claim 1, wherein S-shaped correction is added in successive steps proceeding from said areas located substantially between said center axis (7) and said ones of top and bottom edges (2,13), toward said center axis (7) and toward said edges (2,13), respectively.

3. The video display of claim 1, wherein said digital words stored in said memory (104) represent values derived during alignment of said video display.

4. The video display of claim 1, wherein said digital words defining displacement values stored in said memory represent values formed by interpolation of displacement values applicable to said grid.

5. The video display of claim 1, wherein said linear interpolating means generates said intervening values adjacent ones of said displacement values during a display period.

6. A method for digitally correcting geometric distortion of an image on a display screen, comprising the steps of:

    defining a matrix of spaced adjustment points (A1-P13) on the display screen, in horizontally spaced vertical columns (A-P) of values for local displacement of the image at the adjustment points on the display screen, the values for said columns defining S-shaped vertical correction waveforms having varying slope between adjacent ones of the values;
    linearizing the values for at least two areas of the matrix corresponding to a center axis (7) and top and bottom edges (2,13), and applying progressively greater S-correction proceeding from said center axis and from said edges, to areas of the display screen located substantially between said center axis (7) and said edges (2,13);
    storing the matrix values in a memory (104);
    linearly interpolating between adjacent ones of the matrix values in said vertical columns (A-P) to define correction values for scan lines between the adjustment points, and locally displacing the image between the adjustment points as a function of the linearly interpolated correction values to correct the image on the display screen such that banding and pincushion distortion are controlled.

## Patentansprüche

1. Bildschirmgerät

    mit einer Kathodenstrahlröhre (10) zur Anzeige eines Bilds, auf der eine Ablenkkorrekturspule (GVC) montiert ist, die an einen Treiberverstärker (107) gekoppelt ist,
    mit einem Digital/Analog-Wandler (105) mit einem Ausgang, der an den Treiberverstärker (107) angekoppelt ist,
    mit einem Speicher (104), der Verschiebewerte enthält, die an in einem Gitter von Zeilen (1-13) und Spalten (A-P) in Abständen angeordneten Punkten angewendet werden können, wobei die Verschiebewerte für die Spalten (A-P) allgemein S-förmige Korrekturkurven definieren, die einen maximalen Wert in zwei Bereichen eines Anzeigebildschirms haben, die im wesentlichen zwischen einer Mittelachse (7) und entweder einer Ober- oder einer Unterkante (2, 13) des Displays angeordnet sind, wobei die S-förmigen Korrekturkurven in der Mittelachse (7) und den Kanten (2, 13) benachbarten Bereichen im wesentlichen den Wert Null aufweisen, und
    mit einem Interpolationsmittel (102) zur linearen Interpolation von Werten, die zwischen zwei benachbarten Verschiebewerten liegen, wobei dieses Mittel mit einem Ausgang an den Digital/Analog-Wandler (105) gekoppelt ist, um ein Korrektursignal (I2corG) zu erzeugen, das die Ablenkkorrekturspule (GVC) ansteuert, um örtlich eine Position des Bilds einzustellen, so daß die Streifenbildung und die Kissenverzeichnung unter Kontrolle sind.

**2.** Bildschirmanzeige nach Anspruch 1, wobei die S-förmige Korrektur in aufeinanderfolgenden Schritten hinzugefügt wird, ausgehend von den Bereichen, die im wesentlichen zwischen der Mittelachse (7) und der Ober- bzw. Unterkante (2, 13) liegen, zur Mittelachse bzw. zu den Kanten (2, 13) hin.

**3.** Bildschirmanzeige nach Anspruch 1, wobei die im Speicher (104) gespeicherten digitalen Wörter Werte darstellen, die während des Ausrichtens der Bildschirmanzeige abgeleitet werden.

**4.** Bildschirmanzeige nach Anspruch 1, wobei die im Speicher gespeicherten Verschiebewerte, die digitale Wörter definieren, Werte darstellen, die durch Interpolation von Verschiebewerten gebildet werden, die auf das Gitter anwendbar sind.

**5.** Bildschirmanzeige nach Anspruch 1, wobei das lineare Interpolationsmittel die Zwischenwerte neben einzelnen der Verschiebewerte während einer Anzeigeperiode erzeugt.

**6.** Verfahren zur digitalen Korrektur der geometrischen Verzerrung eines Bilds auf einem Anzeigebildschirm, das die folgenden Schritte umfaßt:

- Definition einer Matrix von beabstandeten Einstellpunkten (A1-P13) auf dem Anzeigebildschirm in horizontal beabstandeten, vertikalen Spalten (A-P) von Werten zur örtlichen Verschiebung des Bilds an den Einstellpunkten auf dem Anzeigebildschirm, wobei die Werte für die Spalten S-förmige vertikale Korrekturwellenformen definieren, die von einem Wert zum nächsten eine veränderliche Neigung haben,
- Linearisierung der Werte für mindestens zwei Bereiche der Matrix entsprechend einer Mittelachse (7) und der Ober- und der Unterkante (2, 13) und Anlegen einer zunehmend größeren S-Korrektur ausgehend von der Mittelachse und von den Kanten zu Bereichen des Anzeigebildschirms, die sich im wesentlichen zwischen der Mittelachse (7) und den Kanten (2, 13) befinden,
- Speichern der Matrixwerte in einem Speicher (104),
- lineare Interpolation zwischen benachbarten Matrixwerten in den vertikalen Spalten (A-P), um Korrekturwerte für Abtastzeilen zwischen den Einstellpunkten zu definieren und örtlich das Bild als Funktion der linear interpolierten Korrekturwerte zwischen den Einstellpunkten zu verschieben, um das Bild auf dem Anzeigebildschirm so zu korrigieren, daß Streifenbildung und Kissenverzeichnung unter Kontrolle sind.

## Revendications

**1.** Dispositif d'affichage vidéo, comprenant :

un tube à rayons cathodiques (10) pour afficher une image, sur lequel est montée une bobine de correction de déviation (WC) et couplé à un amplificateur d'attaque (107) ;
un convertisseur numérique/analogique (105) à sortie couplée audit amplificateur d'attaque (107) ;
une mémoire (104) contenant des valeurs de déplacement applicables à des points espacés dans une grille de rangées (1 à 13) et de colonnes (A à P), lesdites valeurs de déplacement desdites colonnes (A à P) définissant généralement des courbes de correction en forme de S ayant une valeur maximale au niveau de deux zones d'un écran d'affichage situées sensiblement entre un axe central (7) et des bords supérieur et inférieur (2,13) de l'affichage, lesdites courbes de correction en forme de S ayant une valeur sensiblement nulle au niveau de zones adjacentes audit axe central (7) et auxdits bords (2,13) ; et
un moyen d'interpolation (102) pour interpoler linéairement des valeurs intermédiaires adjacentes auxdites valeurs de déplacement et ayant une sortie couplée audit convertisseur numérique/analogique (105) pour générer un signal de correction (I2corV) pour attaquer ladite bobine de correction de déviation (VVC) pour régler localement une position de ladite image de manière à commander les bandes et la distorsion de concavité.

**2.** Affichage vidéo selon la revendication 1, dans lequel la correction en forme de S est ajoutée par pas successifs se déroulant depuis lesdites zones situées sensiblement entre ledit axe central (7) et lesdits bords supérieur et inférieur (2,13), vers ledit axe central (7) et vers lesdits bords (2,13), respectivement.

**3.** Affichage vidéo selon la revendication 1, dans lequel lesdits mots numériques mémorisés dans ladite mémoire (104) représentent des valeurs dérivées durant l'alignement dudit affichage vidéo.

**4.** Affichage vidéo selon la revendication 1, dans lequel lesdits mots numériques définissant les valeurs de déplacement mémorisées dans ladite mémoire représentent des valeurs formées par interpolation de valeurs de déplacement applicables à ladite grille.

5. Affichage vidéo selon la revendication 1, dans lequel ledit moyen d'interpolation linéaire génère lesdites valeurs intermédiaires adjacentes auxdites valeurs de déplacement durant une période d'affichage.

6. Procédé de correction numérique de la distorsion géométrique d'une image sur un écran d'affichage, comprenant les étapes de :

> définition d'une matrice de points de réglage espacés (A1 à P13) sur l'écran d'affichage, en colonnes verticales espacées horizontalement (A à P) de valeurs de déplacement local de l'image au niveau des points de réglage sur l'écran d'affichage, les valeurs desdites colonnes définissant des formes d'onde de correction verticale en forme de S ayant une pente variable entre des valeurs adjacentes ;
> linéarisation des valeurs d'au moins deux zones de la matrice correspondant à un axe central (7) et à des bords supérieur et inférieur (2,13), et application progressive d'une correction S supérieure se déroulant depuis ledit axe central et depuis lesdits bords, jusqu'à des zones de l'écran d'affichage situées sensiblement entre ledit axe central (7) et lesdits bords (2,13) ;
> mémorisation des valeurs matricielles dans une mémoire (104) ;
> interpolation linéaire entre des valeurs adjacentes des valeurs matricielles dans lesdites colonnes verticales (A à P) pour définir des valeurs de correction de lignes de balayage entre les points de réglage, et déplacement local de l'image entre les points de réglage en fonction des valeurs de correction interpolées linéairement afin de corriger l'image sur l'écran d'affichage de manière à commander les bandes et la distorsion de concavité.

# FIG.1

EXTERNAL SETUP MICRO PROC

MICRO PROC 30A

GVC 108

GH

DAC 105

LPF 106

AMP 107

EEPROM 103

CONTROL LOGIC 102

DAC

DAC

GHC  GV

CRT 10

GREEN

RAM 104

DAC

TO 5 SIMILAR CIRCUIT ARRANGEMENTS

RED

CONV. PAT. GEN. 120

DAC

DIGITAL CORRECTION 100

DAC

BLUE

VIDEO CKTS 20

FIG. 2

## FIG.3

## FIG.4

## FIG. 5

VAL.
COR.

COLUMN

J
K
I
H
L
G
M
F
N
E
O
D
P
B
C
A

ROWS

## FIG. 6

ROWS

## FIG. 7

## FIG. 8

## FIG.9

COR.
VAL.

COLUMN

J
K
I
H
L
G
M
F
N
E
O
-D
P
-C
-B
-A

## FIG. 11A

GIVEN
$C_1 = 100$
$C_5 = 500$
Nodes $N = 5$
Then Slope $(d/dt)$

$$= \frac{C_5 - C_1}{N-1}$$

$$= \frac{500 - 100}{4} = 100$$

|  | Col1 | Col2 | Col3 | Col4 | Col5 |
|---|---|---|---|---|---|
| L1 | $C_1$ |  |  |  |  |
| L2 | $C_2$ |  |  |  |  |
| L3 | $C_3$ |  |  |  |  |
| L4 | $C_4$ |  |  |  |  |
| L5 | $C_5$ |  |  |  |  |

## FIG. 11B

MAX

±3LSB

MIN

MAX

±3LSB

FIG. 10

COLUMNS

| 1 (A) | 2 (B) | 3 (C) | 4 (D) | 5 (E) | 6 (F) | 7 (G) | 8 (H) |
|---|---|---|---|---|---|---|---|
| A7+1.2*(A2-A7)-9 | B7+1.2*(B2-B7)-9 | C7+1.2*(C2-C7)-9 | D7+1.2*(D2-D7)-9 | E7+1.2*(E2-E7)-6 | F7+1.2*(F2-F7) | G7+1.2*(G2-G7)+6 | H7+1.2*(H2-H7)+9 |
| A2 | B2 | C2 | D2 | E2 | F2 | G2 | H2 |
| A7+0.8*(A2-A7)+6 | B7+0.8*(B2-B7)+6 | C7+0.8*(C2-C7)+6 | D7+0.8*(D2-D7)+6 | E7+0.8*(E2-E7)+4 | F7+0.8*(F2-F7) | G7+0.8*(G2-G7)-4 | H7+0.8*(H2-H7)-6 |
| A7+0.6*(A2-A7)+9 | B7+0.6*(B2-B7)+9 | C7+0.6*(C2-C7)+9 | D7+0.6*(D2-D7)+9 | E7+0.6*(E2-E7)+6 | F7+0.6*(F2-F7) | G7+0.6*(G2-G7)-6 | H7+0.6*(H2-H7)-9 |
| A7+0.4*(A2-A7)+9 | B7+0.4*(B2-B7)+9 | C7+0.4*(C2-C7)+9 | D7+0.4*(D2-D7)+9 | E7+0.4*(E2-E7)+6 | F7+0.4*(F2-F7) | G7+0.4*(G2-G7)-6 | H7+0.4*(H2-H7)-9 |
| A7+0.2*(A2-A7)+6 | B7+0.2*(B2-B7)+6 | C7+0.2*(C2-C7)+6 | D7+0.2*(D2-D7)+6 | E7+0.2*(E2-E7)+4 | F7+0.2*(F2-F7) | G7+0.2*(G2-G7)-4 | H7+0.2*(H2-H7)-6 |
| A7 | B7 | C7 | D7 | E7 | F7 | G7 | H7 |
| A7+0.2*(A12-A7)-6 | B7+0.2*(B12-B7)-6 | C7+0.2*(C12-C7)-6 | D7+0.2*(D12-D7)-6 | E7+0.2*(E12-E7)-4 | F7+0.2*(F12-F7) | G7+0.2*(G12-G7)+4 | H7+0.2*(H12-H7)+6 |
| A7+0.4*(A12-A7)-9 | B7+0.4*(B12-B7)-9 | C7+0.4*(C12-C7)-9 | D7+0.4*(D12-D7)-9 | E7+0.4*(E12-E7)-6 | F7+0.4*(F12-F7) | G7+0.4*(G12-G7)+6 | H7+0.4*(H12-H7)+9 |
| A7+0.6*(A12-A7)-9 | B7+0.6*(B12-B7)-9 | C7+0.6*(C12-C7)-9 | D7+0.6*(D12-D7)-9 | E7+0.6*(E12-E7)-6 | F7+0.6*(F12-F7) | G7+0.6*(G12-G7)+6 | H7+0.6*(H12-H7)+9 |
| A7+0.8*(A12-A7)-6 | B7+0.8*(B12-B7)-6 | C7+0.8*(C12-C7)-6 | D7+0.8*(D12-D7)-6 | E7+0.8*(E12-E7)-4 | F7+0.8*(F12-F7) | G7+0.8*(G12-G7)+4 | H7+0.8*(H12-H7)+6 |
| A12 | B12 | C12 | D12 | E12 | F12 | G12 | H12 |
| A7+1.2*(A12-A7)+9 | B7+1.2*(B12-B7)+9 | C7+1.2*(C12-C7)+9 | D7+1.2*(D12-D7)+9 | E7+1.2*(E12-E7)+6 | F7+1.2*(F12-F7) | G7+1.2*(G12-G7)-6 | H7+1.2*(H12-H7)-9 |

COLUMNS

| 9 (I) | 10 (J) | 11 (K) | 12 (L) | 13 (M) | 14 (N) | 15 (O) | 16 (P) |
|---|---|---|---|---|---|---|---|
| I7+1.2*(I2-I7)+9 | J7+1.2*(J2-J7)+9 | K7+1.2*(K2-K7)+9 | L7+1.2*(L2-L7)+9 | M7+1.2*(M2-M7)+6 | N7+1.2*(N2-N7) | O7+1.2*(O2-O7)-6 | P7+1.2*(P2-P7)-9 |
| I2 | J2 | K2 | L2 | M2 | N2 | O2 | P2 |
| I7+0.8*(I2-I7)-6 | J7+0.8*(J2-J7)-6 | K7+0.8*(K2-K7)-6 | L7+0.8*(L2-L7)-6 | M7+0.8*(M2-M7)-4 | N7+0.8*(N2-N7) | O7+0.8*(O2-O7)+4 | P7+0.8*(P2-P7)+6 |
| I7+0.6*(I2-I7)-9 | J7+0.6*(J2-J7)-9 | K7+0.6*(K2-K7)-9 | L7+0.6*(L2-L7)-9 | M7+0.6*(M2-M7)-6 | N7+0.6*(N2-N7) | O7+0.6*(O2-O7)+6 | P7+0.6*(P2-P7)+9 |
| I7+0.4*(I2-I7)-9 | J7+0.4*(J2-J7)-9 | K7+0.4*(K2-K7)-9 | L7+0.4*(L2-L7)-9 | M7+0.4*(M2-M7)-6 | N7+0.4*(N2-N7) | O7+0.4*(O2-O7)+6 | P7+0.4*(P2-P7)+9 |
| I7+0.2*(I2-I7)-6 | J7+0.2*(J2-J7)-6 | K7+0.2*(K2-K7)-6 | L7+0.2*(L2-L7)-6 | M7+0.2*(M2-M7)-4 | N7+0.2*(N2-N7) | O7+0.2*(O2-O7)+4 | P7+0.2*(P2-P7)+6 |
| I7 | J7 | K7 | L7 | M7 | N7 | O7 | P7 |
| I7+0.2*(I12-I7)+6 | J7+0.2*(J12-J7)+6 | K7+0.2*(K12-K7)+6 | L7+0.2*(L12-L7)+6 | M7+0.2*(M12-M7)+4 | N7+0.2*(N12-N7) | O7+0.2*(O12-O7)-4 | P7+0.2*(P12-P7)-6 |
| I7+0.4*(I12-I7)+9 | J7+0.4*(J12-J7)+9 | K7+0.4*(K12-K7)+9 | L7+0.4*(L12-L7)+9 | M7+0.4*(M12-M7)+6 | N7+0.4*(N12-N7) | O7+0.4*(O12-O7)-6 | P7+0.4*(P12-P7)-9 |
| I7+0.6*(I12-I7)+9 | J7+0.6*(J12-J7)+9 | K7+0.6*(K12-K7)+9 | L7+0.6*(L12-L7)+9 | M7+0.6*(M12-M7)+6 | N7+0.6*(N12-N7) | O7+0.6*(O12-O7)-6 | P7+0.6*(P12-P7)-9 |
| I7+0.8*(I12-I7)+6 | J7+0.8*(J12-J7)+6 | K7+0.8*(K12-K7)+6 | L7+0.8*(L12-L7)+6 | M7+0.8*(M12-M7)+4 | N7+0.8*(N12-N7) | O7+0.8*(O12-O7)-4 | P7+0.8*(P12-P7)-6 |
| I12 | J12 | K12 | L12 | M12 | N12 | O12 | P12 |
| I7+1.2*(I12-I7)-9 | J7+1.2*(J12-J7)-9 | K7+1.2*(K12-K7)-9 | L7+1.2*(L12-L7)-9 | M7+1.2*(M12-M7)-6 | N7+1.2*(N12-N7) | O7+1.2*(O12-O7)+6 | P7+1.2*(P12-P7)+9 |

*FIG. 12*

```
           │
           ▼
┌──────────────────────┐
│   SAMPLE VALUES      │
│  AT MATRIX NODES     │
│      A1 - P13        │
└──────────────────────┘
           │
           ▼
┌──────────────────────┐
│   LINEARIZE COLS.    │
│       F, N           │
└──────────────────────┘
           │
           ▼
┌──────────────────────┐
│ LINEARIZE COLS AND   │
│  S-COR. MAX 3 LSB    │
│  COLS. ABCD, IJKL, P │
└──────────────────────┘
           │
           ▼
┌──────────────────────┐
│ LINEARIZE COLS AND   │
│  S-COR. MAX 2 LSB    │
│   COLS. E, G, M, O   │
└──────────────────────┘
           │
           ▼
┌──────────────────────┐
│  STORE LINEARIZED    │
│  AND S-COR. VALS.    │
└──────────────────────┘
           │
           ▼
┌──────────────────────┐
│    INTERPOLATE       │
│  NEW VALS. FROM      │
│   STORED VALS.       │
└──────────────────────┘
           │
           ▼
┌──────────────────────┐
│   GEN. COR. SIG.     │
│  FROM ALL VALS.      │
│   & DRIVE COIL       │
│  FOR RASTER COR.     │
└──────────────────────┘
```